(19) Europäisches Patentamt
European Patent Office
Office européen des brevets

(11) Publication number: 0 631 061 A1

## (12) EUROPEAN PATENT APPLICATION

(21) Application number: 93500091.9

(22) Date of filing: 23.06.93

(51) Int. Cl.5: F16C 33/58

(43) Date of publication of application:
28.12.94 Bulletin 94/52

(84) Designated Contracting States:
AT BE CH DE DK ES FR GB IT LI NL SE

(71) Applicant: Sanchez Sanchez, Felix
Escosura, 67-6o D
E-50005 Zaragoza (ES)

(72) Inventor: Sanchez Sanchez, Felix
Escosura, 67-6o D
E-50005 Zaragoza (ES)

(54) Minimum friction cylindrical and/or tapered roller bearings.

(57) Minimum friction, tapered or cylindrical roller bearings consisting of rollers (3) having two or more different diameters ($d$ / $d_1$ / $d_2$ / $d_3$) leaning on and rolling over the raceway inner (2) and outer (1) rings, and having equality relationships between them; that is to say, the relationship between the outer raceway diameter ($D_1$) and the supporting roller diameter ($d_1$) keeps the same proportion to that of the inner raceway diameter (D) with the leaning and rolling roller diameter (d), so that the peripheric speed developed by the roller (3) is the same both for the outer raceway ring (1) and the inner raceway ring (2). Being the rollers (3) and rings (1 and 2) peripheric speed the same, there are no slippages, achieving minimum friction and avoiding heating, wear, clearances and noises, improving the accuracy, service life and obtaining a superior performance from the tapered or cylindrical roller bearings.

FIG.1

The invention relates to both cylindrical and tapered roller bearings comprising rolling elements (rollers) rotating in unison between the inner and outer raceways. This is achieved by balancing the relationships between the runs (or raceway covered in one turn) of the inner and outer diameters, with the different diameters of the rolling elements of cylindrical and/or tapered rollers.

Balancing raceways results in a minimum friction between the three basic elements of a bearing: outer ring, inner ring and rolling elements (rollers).

The bearings are machine elements or members, consisting of a set of concentrical rings in which balls, rollers or other rolling elements are fitted that, when a shaft rotates, make a so-called hearing movement allowing to considerably reduce the friction which would otherwise take place between the fixed and the movable element.

There are bearings in a number of different models, dimensions and capacities which, according to the way they work, are divided into three main groups: 1) radial , if they only support standard loads on the shaft, 2 ) thrust, when the loads are parallel to the shaft, and 3) radial-thrust, when they support both loads at the same time.

The antecedents of use and manufacture are very numerous. Being a very valuable machine accesory, there is a variety of standardized series available. You only need to take a look to any catalog from important companies like SKF, FAG, TIMKEN, COYO, NACHI, etc. to observe the well-known technique. Paradoxically, with the present state-of-the-art the rolling elements (rollers) of all the types of bearings are not rolling over their whole perimeter but rubbing to a great extent proportional to the difference existing between their inner/outer diameters, keeping an only diameter as a rolling element. For instance, a bearing having an inner raceway diameter of 84 mm and an outer diameter of 60, after a shaft mounted on this bearing turns one revolution, the track or raceway the rolling element will have to cover shall be:

dia. 84 x 3.1416 = 263.8937 mm

dia. 60 x 3.1416 = 188.4955 mm

and, being this impossible, the existing difference slips or rubs the raceway against the rolling element. The result of the described example gives a difference of 75.3982 mm after one turn; assuming a shaft turning at 1,000 revolutions per minute, it will give 75.398 meters. After one working hour it would give 4,523.88 meters and after a whole working day it will be:

4,523.88 x 24 = 108.573 Km.

This friction results in a greater wear making the raceway surfaces rougher, thereby increasing the internal play of the bearing. The bearing noise is intensified and the spinning accuracy decreases. The working loads increase and there is a bigger energy consumption, so producing a higher temperature. There is not a state-of-the-art not having friction problems for roller bearings turning radially, that is, two concentric rings with the rolling element in between. However, this continuous friction does not occur in the thrust bearings, which have the same diameters and therefore do not have running differences in their raceway.

The Spanish Patents nr. P 9101346 and P 9202420, both titled "SYSTEM FOR ELIMINATING FRICTION IN BEARINGS", show an advance to the technique in ball, drum, spherical and double-tapered bearings, in radial-thrust versions, adjustable or rigid, which novelty is the balance between the inner/outer raceway diameters relationships with their rolling elements diameters (balls, drums, double-tapered, etc.)

The tapered or cylindrical roller bearings here specified make the relationships between the raceways or tracks, both internal and external, have the same traveling balanced by the different diameters of the rolling elements (rollers). The latter have two or more different diameters, so that when one roller diameter rolls or contacts with the inner diameter of the ring, it is equal to the outer diameter of the ring and the contact diameter of the roller; that is, the differences between the raceway diameters (inner/outer rings) are offset by the different diameters between the rolling elements (rollers). Therefore, these rollers, when cylindrical, will have two different diameters: one leaning on and rolling over the inner ring and the other on and over the outer ring. The cylindrical roller diameters can roll over one, two or more supports, both at the inner and outer raceways, being the number of supports or raceways for the rollers or rolling elements not limitative. However, the tapered roller bearings, as the contact between the rings arid rollers is tapered, have different diameters on an infinite range from the smaller to the bigger diameter, which are naturally related with those of the inner/outer rings so that the bigger ring diameter, the bigger roller diameter in their tapering. Therefore, the rollers rotate with the same peripheric speed, just the same when they roll over the inner ring as over the outer. The whole thing means a substantial reduction of friction (only that friction proper of the physical laws in a rolling movement), given that there is no slipping or rubbing, but rolling, with synchronized turning between the inner/outer rings and the rolling element.

Another substantial improvement in these bearings is to be able to have two or more supporting lines between rollers/rings which results in a better load distribution, thereby reducing temperature, wear, noise, and increasing the bearing service life and accuracy; that is, increasing and perfecting their performance.

Another advantage is that these bearings, by controlling the friction between the rollers and the raceway rings, will make it possible to use other materials that cannot be used with the present technique, because of the high temperatures reached by the conventional bearings.

The most remarkable characteristics and particularities of this execution can be appreciated in the attached drawings better than through the previous purely literal description so far made. These drawings represent an example of a preferential form of practical execution.

The Figure 1 is a half-section of a cylindrical roller bearing, leaning on the inner ring on two lines (raceway at the ends) . The roller is leaning on the outer ring on one line (raceway at the center).

The Figure 2 shows a half-section of a cylindrical roller bearing, being one line of the roller leaning on the inner ring (raceway at the center) while the other support is on the outer ring in two contact lines with the cylindrical rollers (raceway at the ends).

The Figure 3 shows a half-section of a tapered roller bearing in which the tapered roller ends raceway with the inner raceway ring can be appreciated, while the outer raceway ring is with the roller center line.

The Figure 4 represents a half-section of a tapered roller bearing, in which the inner raceway leans on a line of the tapered roller, while the outer raceway leans on the lines of the two ends of the tapered roller.

For better clarification of the half-sections represented by the four figures, a section is projected for each of them showing a quarter of a section of those figures in a front view. These drawings show the main parts using the following numerical and alphabetical references:

1.- Inner ring (outer raceway(s)).
2.- Outer ring (inner raceway(s)).
3.- Rolling element (rollers).
4.- Roller spacer or cage.
A.- Damping area.
B.- Outer raceway line(s).
C.- Inner raceway line(s).
D.- Inner ring outer raceway diameter (the smallest diameter).
$D_1$.- Outer ring inner raceway diameter (the biggest diameter).
$D_2$.- Inner ring outer raceway diameter, the maximum diameter of its outer raceway.
$D_3$.- Outer ring inner raceway diameter, being the minimum diameter of the inner raceway.
d.- Diameter of the roller-rolling element (the smallest diameter).
$d_1$.- Diameter of the roller-rolling element (the biggest diameter).

$d_2$.- Maximum diameter of the smallest roller-rolling element.
$d_3$.- Minimum diameter biggest diameter roller-rolling element.

The alphanumerical representations: $D_2$ ; $D_3$ ; $d_2$ and $d_3$ are only indicated for the tapered roller bearings.

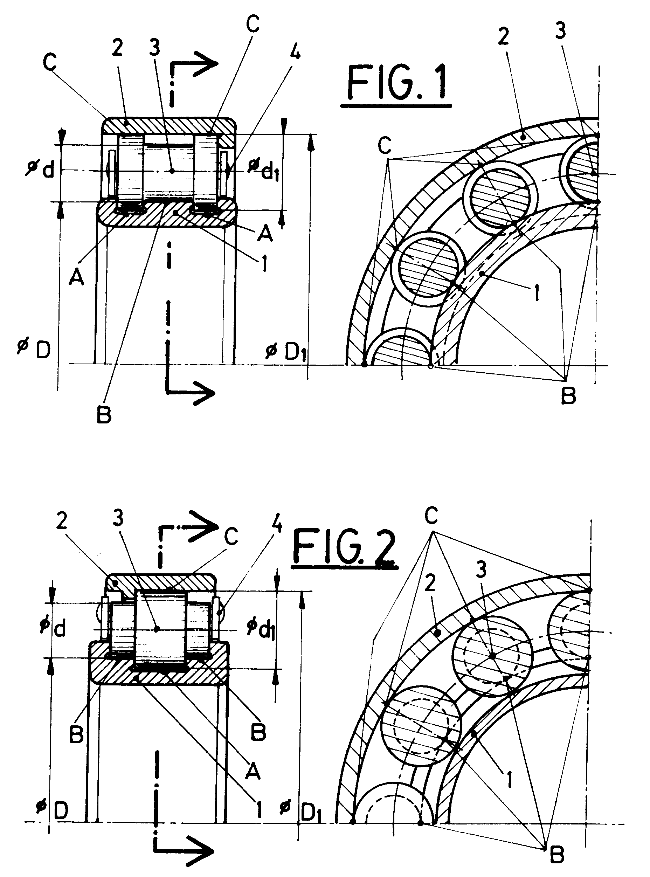

According to the invention, the figures 1, 2, 3 and 4 show the half-sections and their four basic elements appear in any of them: Outer raceway ring (1) and Inner raceway ring (2) . Between these rings, the Rolling elements are housed (3). This assembly keeps the relationship between (D : d) = ($D_1$ : $d_1$). Also as a construction element the Roller spacer or Cage is included (4), but neither as a novelty nor as an inventive activity, only as an assembly accesory for a bearing. Between the outer raceway of the ring (2) there is a small clearance, enough to avoid friction, but for Damping in the "A" area, in case of abnormal loads or sudden stresses on the bearing.

The figures 1 and 2 show bearings having as rolling elements (3) cylindrical rollers rolling over the cylindrical roller (3) biggest diameter ($d_1$) and over the outer ring (2) represented by ($D_1$). The roller (3) rolls over the inner ring (1) of (D) in its diameter represented by (d), being the important thing of this invention that the relationship D : d is equal to $D_1$ : $d_1$; that is, the cylindrical rollers (3) peripheric speed will be identical to that of the raceways, both internal and external.

Thus, if we assume that
D = 60 and $D_1$ = 84
d = 10 and $d_1$ = 14
we will get 60 : 10 = 6 and 84 : 14 = 6. Therefore, after a shaft accompanying the inner ring (1) turns round once, the cylindrical rollers (3) will turn round 6 times when covering the travel of a spin.

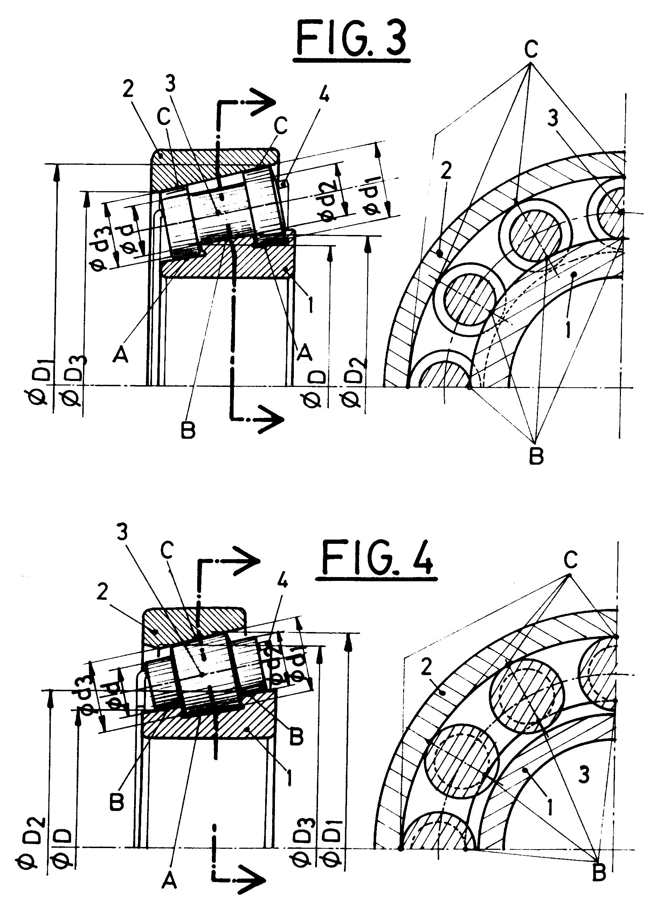

The drawings in figures 3 and 4 represent the inner (1) and outer (2) rings with the rolling elements (3) consisting in this case of tapered rollers. Over the Inner ring (1), given its tapering, two diameters (D / $D_2$) are designated which the tapered rollers (3) roll in their diameters (d / $d_2$). While the Outer ring (2), diameters ($D_1$ / $D_3$) makes the inner raceway of the said tapered rollers (3) with the referenced diameters ($d_1$ / $d_3$) .

The relationships in this case will be, D : d = $D_1$ : $d_1$ = $D_2$ : $d_2$ = $D_3$ : $d_3$. If there were more diameters it would be $D_x$ : $d_x$ = the same relationship.

Example,
D = 60 ; $D_1$ = 84 ; $D_2$ = 66 ; $D_3$ = 78;
d = 10 ; $d_1$ = 14 ; $d_2$ = 11 ; $d_3$ = 13;
We will have,
60 : 10 = 6 ; 84 : 14 = 6
66 : 11 = 6 ; 78 : 13 = 6
and in general,

$D_x : d_x = 6$

That is to say, after one turn or spin made by the shaft accompanying the Inner ring (1), all the tapered rollers (3) will roll synchronizedly when making a complete spin and will turn around 6 times. If the shaft is fixed, exactly the same will occur and the Outer ring (2), when making a turn, will make the rolling elements turn round 6 times (in this case, tapered rollers (3)).

## Claims

1. Minimum friction, cylindrical or tapered roller bearings having an Inner ring (1) concentrical to an Outer ring (2), between which rolling elements (3) are housed, guided by roller spacers or a Cage (4). The cylindrical rollers (3) have two different contact diameters, one leaning on and rolling over the outer raceway (D), with the roller diameter (d) and the inner raceway diameter $(D_1)$ of the Outer ring (2), and the other diameter of the cylindrical roller $(d_1)$ being characterized by a relationship of equality between their diameters (D : d) and $(D_1 : d_1)$, thereby achieving a synchronized balancing of peripheric speeds between the rolling elements (3) and the inner (1) and outer (2) rings, thus making all the rollers roll with minimum friction.

2. Minimum friction cylindrical or tapered roller bearings, according to claim 1 . When housed on the Inner (1) and Outer (2) rings, the tapered rollers (3) as rolling elements generate several different diameters as a result of their tapering. Therefore, the diameters $(d / d_2)$ roll leaning on the diameters $(D / D_2)$ of the Inner raceway ring (2) while the diameters $(D / D_2)$ of the Outer raceway ring (1) roll over the diameters of the tapered rollers $(d_1$ and $d_3)$ characterized by equality relationships between their diameters $(D : d) = (D_1 : d_1) = (D_2 : d_2) = (D_3 : d_3) =$ any existing relationships developing equal peripheric speeds between the Inner ring (1), the Outer ring (2) and the tapered rollers (3).

3. Roller bearings, according to the previous claims, having rolling elements (3) projecting one or more supporting lines over which they roll in their diameters $(d_1/d_3)$ over the Inner raceway ring "C", while the lines of the rolling elements keep a minimum clearance avoiding constant friction but allowing "A" Dampening when sudden or abnormal loads occur. The diameters of the rolling elements $(d / d_3)$ form one or more "B" lines rolling leaning on the raceway Ring (1).

FIG.1

FIG.2

# FIG. 3

# FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 629 340 (R.R. PROVOST)<br>* the whole document *<br>--- | 1-3 | F16C33/58 |
| X | FR-A-982 401 (R.D. DESIGAUD)<br>* the whole document *<br>--- | 1,2 | |
| A | US-A-4 040 689 (R.B. STANLEY)<br>* column 2, line 50 - column 3, line 37; figure 6 *<br>--- | 1 | |
| A | FR-A-583 370 (SANCHEZ-ROBLES)<br>--- | | |
| A | EP-A-0 517 642 (F. SANCHEZ SANCHEZ)<br><br>----- | | |

TECHNICAL FIELDS SEARCHED (Int. Cl.5 )

F16C

The present search report has been drawn up for all claims

| Place of search | Date of completion of the search | Examiner |
|---|---|---|
| BERLIN | 22 NOVEMBER 1993 | HOFFMANN M. |

EPO FORM 1503 03.82 (P0401)